# EUROPEAN PATENT APPLICATION

(11) **EP 4 682 972 A1**
(43) Date of publication of application: **21.01.2026**
(21) Application number: 24873851.0
(22) Date of filing: 27.11.2024
(51) Int. Cl.: H01M 4/133

(54) **BATTERY AND PREPARATION METHOD THEREFOR, AND ELECTRIC DEVICE**

(30) Priority: 30.05.2024 CN 202410688107
(71) Applicant: Contemporary Amperex Technology Co., Limited, Ningde, Fujian 352100 (CN)
(72) Inventor: ZENG, Chen, Ningde, Fujian 352100 (CN); KANG, Meng, Ningde, Fujian 352100 (CN); HE, Libing, Ningde, Fujian 352100 (CN)
(74) Representative: Lorenz Seidler Gossel Part. mbB
(86) International application number: PCT/CN2024/135024
(87) International publication number: WO 2025/246231

(57) **Abstract**

This disclosure relates to the field of battery technologies and discloses a battery, a preparation method thereof, and an electric apparatus. The battery includes a positive electrode plate, a negative electrode plate, and a separator. The negative electrode plate includes a negative electrode current collector and a negative electrode active material layer located on at least one side of the negative electrode current collector. The negative electrode active material layer includes a negative electrode active material. The negative electrode active material includes graphite. A quantity proportion of secondary particles in the negative electrode active material is greater than or equal to 65%; an oil absorption value of the negative electrode active material is 40 mL/100g to 65 mL/100g; and a particle size by volume Dᵥ1 of the negative electrode active material is 4 µm to 8 µm.

## Description

### TECHNICAL FIELD

This application relates to the field of battery technologies, and specifically to a battery, a preparation method thereof, and an electric apparatus.

### BACKGROUND

Batteries have been widely used in energy storage power supply systems such as hydroelectric, thermal, wind and solar power plants, as well as in various fields of electric tools, electric bicycles, electric motorcycles, electric vehicles, and the like. As the application range of batteries gradually expands, higher requirements have been imposed on the rate performance of batteries by the market. However, there are still many deficiencies in the current battery production and application, and the rate performance of batteries needs further improvement.

It should be noted that the above description is merely intended to provide background information related to this application and does not necessarily constitute the prior art.

### SUMMARY

According to a first aspect, this application provides a battery including a positive electrode plate, a negative electrode plate, and a separator. The negative electrode plate includes a negative electrode current collector and a negative electrode active material layer located on at least one side of the negative electrode current collector. The negative electrode active material layer includes a negative electrode active material. The negative electrode active material includes graphite. A quantity proportion of secondary particles in the negative electrode active material is greater than or equal to 65%; an oil absorption value of the negative electrode active material is 40 mL/100g to 65 mL/100g; and a particle size by volume Dv1 of the negative electrode active material is 4 µm to 8 µm. This can significantly improve the rate performance and processing performance of the negative electrode active material and help to improve the rate performance of the battery.

In some embodiments, the negative electrode active material satisfies that (Dᵥ90-Dᵥ10)/Dᵥ50 is 0.8 to 1.2. This can improve the kinetic performance of the negative electrode active material.

In some embodiments, a particle size by volume Dᵥ10 of the negative electrode active material is 7 µm to 11 µm, and/or a particle size by volume Dᵥ90 of the negative electrode active material is 20 µm to 30 µm, and/or a particle size by volume Dᵥ50 of the negative electrode active material is 12 µm to 18 µm. This can further improve the rate performance of the negative electrode active material.

In some embodiments, a graphitization degree of the negative electrode active material is 93% to 95%. This can improve the electronic conductivity of the negative electrode active material.

In some embodiments, a specific surface area of the negative electrode active material is 2.5 m²/g to 3.5 m²/g. This can further improve the processing performance of the negative electrode active material.

In some embodiments, the negative electrode active material further includes a carbon coating layer, the carbon coating layer is located on at least part of a surface of the secondary particle, and the secondary particle is formed by bonding at least two primary particles, using a bonding material including a carbon material. This can improve the conductibility of the negative electrode active material.

In some embodiments, a porosity of the negative electrode active material layer is 18% to 35%. This is conducive to infiltration of an electrolyte into the negative electrode plate.

In some embodiments, a compacted density of the negative electrode active material layer is 1.60 g/cm³ to 1.75 g/cm³. This is conducive to infiltration of the electrolyte into the negative electrode plate.

According to a second aspect, this application provides a method for preparing the foregoing battery, including: mixing graphite primary particles with a binder and performing a first heat treatment to obtain pre-bonded secondary particles; performing a second heat treatment and a first classification treatment on the pre-bonded secondary particles to obtain secondary particles, so as to obtain a negative electrode active material; and arranging the negative electrode active material on one side of a negative electrode current collector to obtain a negative electrode plate, and assembling the negative electrode plate, a separator, and a positive electrode plate to obtain the battery. In this way, the foregoing battery with good rate performance can be prepared using a simple method.

In some embodiments, the providing the graphite primary particles includes: performing a pulverization treatment and a second classification treatment on a raw material to obtain the graphite primary particles, where the raw material includes at least one of raw petroleum coke and raw needle coke; and the providing the graphite primary particles satisfies at least one of the following conditions: a volatile percentage in the raw material is 4% to 7%; a true density of the raw material is 1.35 g/cm³ to 1.50 g/cm³; a sulfur percentage in the raw material is less than or equal to 2%; a feeding frequency for the pulverization treatment is 10 Hz to 35 Hz; and a classification frequency for the second classification treatment is 30 Hz to 50 Hz. This can improve the particle size uniformity of the graphite primary particles.

In some embodiments, the binder includes at least one of asphalt and resin, and the binder satisfies at least one of the following conditions: a coking value of the binder is 60% to 70%; a mass ratio of the binder to the graphite primary particles is (7-10): 100; and a particle size of the binder is 4 µm to 8 µm. This can improve a bonding effect of the binder on the graphite primary particles.

In some embodiments, the first heat treatment is performed at a temperature of 600°C to 800°C, and the first heat treatment is performed for 1 h to 4 h. This helps to improve pre-bonding of the graphite primary particles by the binder.

In some embodiments, the second heat treatment is performed at a temperature of 2800°C to 3300°C, and the second heat treatment is performed for 36 h to 72 h. This helps to improve the bonding effect of the binder on the graphite primary particles.

In some embodiments, the first classification treatment satisfies at least one of the following conditions: a sieve used in the first classification treatment has 300 meshes to 350 meshes; a feeding frequency for the first classification treatment is 4 Hz to 10 Hz; and a classification frequency for the first classification treatment is 30 Hz to 50 Hz. In this way, fine powder in the secondary particles can be effectively removed.

In some embodiments, after obtaining the secondary particles, the method further includes: mixing the secondary particles with a liquid-phase coating agent and performing a third heat treatment to form a carbon coating layer on part of a surface of the secondary particle, where the liquid-phase coating agent includes at least one of asphalt and resin with a viscosity of less than or equal to 500 mPa·s. In this way, the carbon coating layer can be formed on the surface of the secondary particle.

In some embodiments, a mass ratio of the liquid-phase coating agent to the secondary particles is (2-10):100, and/or a coking value of the liquid-phase coating agent is 40% to 70%. This helps the negative electrode active material to achieve both good rate performance and gram capacity.

In some embodiments, the third heat treatment is performed at a temperature of 1000°C to 1200°C, and the third heat treatment is performed for 15 h to 30 h. This helps to form an amorphous carbon coating layer.

According to a third aspect, this application provides an electric apparatus including the foregoing battery and/or a battery prepared using the foregoing method. Thus, the electric apparatus has all the features and advantages of the foregoing battery and preparation method. Details are not described herein again.

### BRIEF DESCRIPTION OF DRAWINGS

The above and/or additional aspects and advantages of this application will become obvious and easy to understand from the description of the embodiments with reference to the following accompanying drawings.
FIG. 1 is a schematic diagram of a battery cell according to an embodiment of this application;
FIG. 2 is an exploded view of the battery cell according to the embodiment of this application shown in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application shown in FIG. 4;
FIG. 6 is a schematic diagram of an electric apparatus using a battery according to an embodiment of this application as a power source;
FIG. 7 is a scanning electron microscope image of a negative electrode active material according to an embodiment of this application;
FIG. 8 is a scanning electron microscope image of a negative electrode active material according to a comparative example of this application; and
FIG. 9 is a scanning electron microscope image of a negative electrode active material according to an embodiment of this application.

Description of reference signs:
1. battery pack; 2. upper box body; 3. lower box body; 4. battery module; 5. battery cell;
51. shell; 52. electrode assembly; and 53. top cover assembly.

### DESCRIPTION OF EMBODIMENTS

The following describes in detail the embodiments of this application, examples of the embodiments are shown in the accompanying drawings, but there are cases in which unnecessary detailed description is omitted. For example, detailed descriptions of well-known matters and repeated descriptions of actually identical structures have been omitted. This is to avoid unnecessarily prolonging the following descriptions, for ease of understanding of persons skilled in the art. In addition, the accompanying drawings and the following descriptions are provided for persons skilled in the art to fully understand this application and are not intended to limit the subject described in the claims.

Unless otherwise defined, all technical and scientific terms used in this application have the same meanings as commonly understood by persons skilled in the art of this application. The terms used in this application are merely intended to describe specific embodiments, but not to limit this application. Unless otherwise specified, values of parameters mentioned in this application may be measured using various measurement methods commonly used in the art (for example, may be measured using methods provided in the embodiments of this application).

The terms "comprise", "include", and any variant thereof in the specification and claims of this application are open-ended expressions, meaning that they include the content specified in this application but do not exclude other aspects of content.

In the description of this application, whether the words such as "approximately" or "about" are used or not, all numbers disclosed herein are approximate values. The value of each number may have less than 10% of variation or a variation that is considered to be reasonable by persons skilled in the art, for example, a variation of 1%, 2%, 3%, 4%, or 5%.

"Ranges" disclosed in this application are defined in the form of lower and upper limits. A given range is defined by one lower limit and one upper limit selected, where the selected lower and upper limits define boundaries of that special range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer such as 2, 3, 4, 5, 6, 7, 8, 9, 10, 11, or 12.

In the description of this application, the terms "first" and "second" are merely for the purpose of description and shall not be understood as any indication or implication of relative importance or any implicit indication of the quantity of the technical features indicated. "A first feature" and "A second feature" may include one or more such features.

In the description of this application, "A and/or B" may include any one of a case of only A, a case of only B, and a case of both A and B, where A and B are merely used as examples, and can be any technical feature connected by "and/or" in this application.

In this application, persons skilled in the art can understand that the order in which the steps are described does not necessarily imply a strict execution order and does not limit the implementation process in any way. The specific execution order of the steps should be determined by the function and possible inherent logic of the steps. Unless otherwise stated, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise stated, all the embodiments and optional embodiments of this application can be combined with each other to form new technical solutions.

Unless otherwise stated, all the technical features and optional technical features of this application can be combined with each other to form new technical solutions.

In an example in which the negative electrode active material is graphite, when the graphite is secondary particles, since the secondary particles are isotropic and have many lithium ion transport channels, lithium ion intercalation and deintercalation entries of the negative electrode active material can be effectively increased, lithium ion interface reaction can be improved, and a lithium ion migration rate can be increased. Thus, the rate performance of the negative electrode active material is improved. In addition, an expansion force generated during lithium intercalation of the negative electrode active material can be released in a plurality of directions, thereby reducing thickness changes of the negative electrode plate during charging and correspondingly reducing battery swelling.

Specifically, graphite primary particles can be bonded together to form graphite secondary particles. However, when the graphite primary particles are bonded by a binder, many concave-convex structures are formed on the surface of the graphite secondary particle. The concave-convex structures apply a strong adsorption force on a dispersant and adsorb a large amount of dispersant in a negative electrode slurry onto the surface of the secondary particle, so that the lithium intercalation and deintercalation channels on the surface of the graphite are blocked, and there is a small amount of free dispersant in the negative electrode slurry, leading to poor stability of the negative electrode slurry. In this case, the negative electrode active material exhibits a large oil absorption value. Further, before the negative electrode slurry is applied, a filtration treatment is required to remove impurities in the negative electrode slurry. The concave-convex structures on the surface of the secondary particle make it difficult for the graphite to be completely dispersed in the negative electrode slurry, resulting in degraded stability of the negative electrode slurry, and making the negative electrode slurry fail to meet filtration requirements.

To compensate for excessive adsorption of the dispersant by the negative electrode active material with a large oil absorption value and to achieve uniform dispersion of the negative electrode slurry, more dispersant needs to be added to the negative electrode slurry. However, the dispersant does not have lithium intercalation and deintercalation functions, leading to a decrease in a proportion of the negative electrode active material that can provide lithium intercalation and deintercalation sites in the negative electrode slurry, and correspondingly reducing a proportion of the negative electrode active material in the negative electrode active material layer formed by applying the negative electrode slurry, thereby ultimately resulting in poor specific capacity of the negative electrode plate.

In this application, when the quantity proportion of secondary particles in the negative electrode active material is greater than or equal to 65%, the quantity proportion of the secondary particles in the negative electrode active material is relatively high, which can effectively improve the rate performance of the negative electrode active material and reduce a volume expansion rate of the negative electrode active material during charging and discharging. Further, while the graphite primary particles are being bonded to form the graphite secondary particles, fine powder with a small particle size is likely to form a convex structure on the surface of the secondary particle, resulting in an excessively large oil absorption value of the negative electrode active material. When a particle size Dᵥ1 of the negative electrode active material is 4 µm to 8 µm, there is very little fine powder with a particle size less than 3 µm in the negative electrode active material, which helps to control the oil absorption value of the negative electrode active material to be within an appropriate range. In this case, the oil absorption value of the negative electrode active material may be 40 mL/100g to 65 mL/100g, and a quantity and proportion of concave-convex structures on the surface of the negative electrode active material are appropriate. When a small amount of binder is used in the negative electrode slurry, the negative electrode active material still has good dispersibility in the negative electrode slurry, the negative electrode slurry has relatively good processing performance, and only a small amount of dispersant is required in the negative electrode slurry, so there is no need to additionally increase a percentage of the dispersant in the negative electrode slurry, thereby reducing preparation costs of the negative electrode slurry, increasing the proportion of negative electrode active material in the negative electrode slurry, and improving the kinetic performance of the negative electrode plate.

In an example, the negative electrode active material may be prepared using the following method: performing a pulverization treatment and a second classification treatment on a raw material to obtain the graphite primary particles; mixing the graphite primary particles with a binder and performing a first heat treatment to obtain pre-bonded secondary particles; performing a second heat treatment and a first classification treatment on the pre-bonded secondary particles to obtain secondary particles; mixing the secondary particles with a liquid-phase coating agent and performing a third heat treatment to form a carbon coating layer on part of a surface of the secondary particle, thereby obtaining the negative electrode active material.

In some embodiments, particle size uniformity and surface roundness of the negative electrode active material can be regulated through the pulverization treatment, shaping treatment, and classification treatment of the raw material. For example, when a main machine for the pulverization treatment is at an appropriate frequency, a particle size of pulverized particles is appropriate; when a main machine for the shaping treatment is at an appropriate frequency, the particles have a relatively round surface morphology and an appropriate particle size; and when the classification treatment is performed at an appropriate frequency, particle size uniformity of the particles is relatively high. Specifically, after a centimeter-level raw coke raw material is crushed into a micron-level raw material through a pulverization treatment, the crushed raw material with a small particle size can be classified and screened through a second classification treatment, to remove fine powder with an excessively small particle in the raw material and reduce convex structures formed by self-agglomeration of fine powder impurities due to the small size. Further, a shaping treatment may be performed between the pulverization treatment and the second classification treatment, to reduce an aspect ratio of the graphite particles, increase a degree of sphericity thereof, improve the particle shape, particle size distribution, and surface characteristics of the primary particle powder, and improve the particle size uniformity of the graphite primary particles.

In some embodiments, the fine powder in the secondary particle powder can be effectively screened through a first classification treatment, effectively reducing convex surfaces formed in a subsequent surface coating process, thereby reducing the oil absorption value of the negative electrode active material.

In some embodiments, the liquid-phase coating agent has good fluidity, spreads more evenly on the surface of the secondary particle, forms fewer surface protrusions, and thus can better cover the surface of the secondary particle. This helps to reduce convex surfaces formed during coating, thereby reducing the oil absorption value of the negative electrode active material.

In this application, the "oil absorption value of the negative electrode active material" has a meaning well known in the art and can be measured using instruments and methods well known in the art. For example, the oil absorption value can be obtained based on an amount of dibutyl phthalate used when a mixture of the negative electrode active material and the dibutyl phthalate changes from a freely-flowing state to a semi-plastic agglomerate. Specifically, 100 g of the negative electrode active material is placed at a feeding opening of an oil absorption value tester, and dibutyl phthalate is automatically titrated by a device and flows to the negative electrode active material until the negative electrode active material becomes a semi-plastic agglomerate. The amount of the dibutyl phthalate added at that moment (a mL) is recorded, and then the oil absorption value of the negative electrode active material is obtained as a mL/100g.

In this application, the "percentage of the secondary particles in the negative electrode active material" has a meaning well known in the art and can be measured using instruments and methods well known in the art. For example, a scanning electron microscope may be used for testing. In an example, a method for measuring a quantity proportion of the secondary particles can be as follows: laying and sticking the negative electrode active material on a conductive adhesive to form a sample with a size of length×width=6 cm×1.1 cm; and using a scanning electron microscope (such as ZEISS Sigma 300) to test the particle morphology. For the test, reference may be made to JY/T010-1996. To ensure accuracy of test results, a plurality of (for example, 20) different regions may be randomly selected in the to-be-tested sample for the scanning test, and at a specific magnification rate (for example, 1000 times), a quantity proportion of the secondary particles in each test region in a total quantity of particles is calculated as a quantity proportion of the secondary particles in the region. An average value of test results of the plurality of test regions is used as the quantity proportion of the secondary particles in the negative electrode active material.

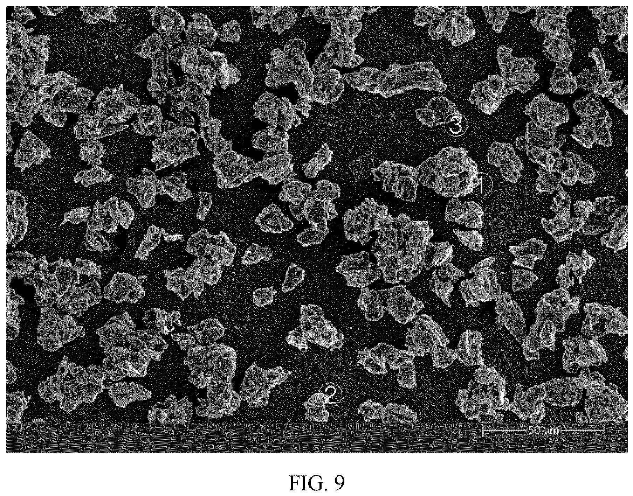

In some embodiments, a substance of the negative electrode active material layer on the surface of the negative electrode plate can be removed by scraping, and substances such as the binder, conductive agent, and dispersant in the negative electrode active material are removed by calcination in a muffle furnace, to obtain negative electrode active material powder. Further, the quantity proportion of the secondary particles can be calculated as follows: (a) uniformly dispersing the negative electrode active material powder on a conductive tape substrate by using a vacuum negative-pressure sputtering method; (b) taking 50 pictures at a high speed by using a mapping function of a scanning electron microscope (such as Thermo Scientific Apreo 2 S); and (c) automatically marking the particles in each picture by using an AI technology to obtain quantities of the primary particles and secondary particles, performing statistical analysis on results, and performing calculation to obtain the quantity proportion of the secondary particles. The secondary particles are defined as: when two or more particles are stacked, they are considered as one secondary particle. For example, the secondary particles may be a stack of particles with different particle sizes (as shown in ① of FIG. 9), a stack of particles with similar particle sizes (as shown in ② of FIG. 9), or a stack of particles with smaller particle sizes on the surface of a particle with a larger particle (as shown in ③ of FIG. 9).

According to a first aspect, this application provides a battery including a positive electrode plate, a negative electrode plate, and a separator. The negative electrode plate includes a negative electrode current collector and a negative electrode active material layer located on at least one side of the negative electrode current collector. The negative electrode active material layer includes a negative electrode active material. The negative electrode active material includes graphite. A quantity proportion of secondary particles in the negative electrode active material is greater than or equal to 65%; an oil absorption value of the negative electrode active material is 40 mL/100g to 65 mL/100g; and a particle size by volume Dv1 of the negative electrode active material is 4 µm to 8 µm. This can significantly improve the rate performance and processing performance of the negative electrode active material and help to improve the rate performance of the battery.

When the quantity proportion of the secondary particles in the negative electrode active material is greater than or equal to 65%, a quantity of lithium ion intercalation and deintercalation channels in the negative electrode active material can be significantly increased, so that the rate performance of the negative electrode active material is improved. In addition, when the oil absorption value of the negative electrode active material is 40 mL/100g to 65 mL/100g, a small amount of concave-convex structures are on the surface of the negative electrode active material, and only a small amount of dispersant is needed to achieve uniform dispersion of the negative electrode active material, achieving good processing performance of the negative electrode active material.

In an example, the quantity proportion of the secondary particles in the negative electrode active material may be 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, 99%, or 100%.

It can be understood that a larger quantity proportion of the secondary particles in the negative electrode active material results in better the kinetic performance of the negative electrode active material. When the negative electrode active material contains only secondary particles, the kinetic performance of the negative electrode active material is optimal. In this case, a proportion of the binder used to bond adjacent primary particles in the negative electrode active material is relatively high. Since the binder can only serve as a lithium ion intercalation and deintercalation channel and cannot serve as an intercalation and deintercalation site, the negative electrode active material has high kinetic performance and relatively low gram capacity. Persons skilled in the art can adjust the quantity proportion of the secondary particles in the negative electrode active material according to actual conditions.

The quantity proportion of the secondary particles in the negative electrode active material is affected by the percentage and particle size of the binder in the negative electrode active material. Specifically, a larger percentage of the binder in the negative electrode active material results in more sufficient bonding between the graphite primary particles and a higher quantity proportion of the secondary particles in the negative electrode active material. Further, when the binder has a small particle size, the binder can provide more adhesive surfaces, resulting in more effective bonding between the primary particles, and achieving a higher quantity proportion of the secondary particles in the negative electrode active material.

In some embodiments, a mass ratio of the binder to the graphite primary particles is (7-10):100. In some other embodiments, the particle size of the binder is 4 µm to 8 µm.

In an example, the oil absorption value of the negative electrode active material may be 40 mL/100g, 41 mL/100g, 42 mL/100g, 43 mL/100g, 44 mL/100g, 45 mL/100g, 46 mL/100g, 47 mL/100g, 48 mL/100g, 49 mL/100g, 50 mL/100g, 51 mL/100g, 52 mL/100g, 53 mL/100g, 54 mL/100g, 55 mL/100g, 56 mL/100g, 57 mL/100g, 58 mL/100g, 59 mL/100g, 60 mL/100g, 61 mL/100g, 62 mL/100g, 63 mL/100g, 64 mL/100g, or 65 mL/100g.

When the oil absorption value of the negative electrode active material is 40 mL/100g to 65 mL/100g, the negative electrode active material has both good kinetic performance and gram capacity.

In some embodiments, the negative electrode active material includes graphite, where a quantity proportion of secondary particles in the graphite is greater than or equal to 65%, and an oil absorption value of the graphite is 40 mL/100g to 65 mL/100g.

In some embodiments, a particle size by volume Dᵥ1 of the negative electrode active material is 4 µm to 8 µm.

While the primary particles are being bonded to form the secondary particles, fine powder with a small particle size is likely to form a convex structure on the surface of the secondary particle, resulting in an excessively large oil absorption value of the negative electrode active material. The particle size Dᵥ1 of the negative electrode active material being 4 µm to 8 µm indicates that there is very little fine powder with a particle size less than 3 µm in the negative electrode active material, which helps to control the oil absorption value of the negative electrode active material to be within an appropriate range, thereby further improving the processing performance of the negative electrode active material.

The particle size Dᵥ1 mentioned above refers to a particle size at which a cumulative volume distribution percentage of the particle reaches 1%.

In some embodiments, the negative electrode active material satisfies that (Dᵥ90-Dᵥ10)/Dᵥ50 is 0.8 to 1.2. This can improve the kinetic performance of the negative electrode active material.

In an example, (Dᵥ90-Dᵥ10)/Dᵥ50 may be 0.8, 0.85, 0.9, 0.95, 1, 1.05, 1.1, 1.15, or 1.2.

When the negative electrode active material satisfies that (Dᵥ90-Dᵥ10)/Dᵥ50 is 0.8 to 1.2, a better particle size distribution of the negative electrode active material is achieved, a tortuosity of the lithium ion intercalation and deintercalation channel is lower, a transport path is shorter, and the negative electrode active material has better kinetic performance. In addition, a tap density of the negative electrode active material is also affected by a particle size distribution range. When the particle size distribution of the negative electrode active material is within the above range, there are fewer particles with a small particle size in the negative electrode active material and less agglomeration between the particles with a small particle size, thereby effectively reducing a quantity of large particles formed by agglomeration of the particles with a small particle size. In this way, the negative electrode active material includes an appropriate quantity of particles with a large particle size and particles with a small particle size, significantly improving the tap density.

The particle size Dᵥ10 mentioned above refers to a particle size at which a cumulative volume distribution percentage of the particle reaches 10%.

The particle size Dᵥ50 mentioned above refers to a particle size at which a cumulative volume distribution percentage of the particle reaches 50%.

The particle size Dᵥ90 mentioned above refers to a particle size at which a cumulative volume distribution percentage of the particle reaches 90%.

In some embodiments, the particle size by volume Dᵥ10 of the negative electrode active material is 7 µm to 11 µm, and/or the particle size by volume Dᵥ90 of the negative electrode active material is 20 µm to 30 µm, and/or the particle size by volume Dᵥ50 of the negative electrode active material is 12 µm to 18 µm. This can further improve the rate performance of the negative electrode active material.

In an example, the particle size by volume Dᵥ10 of the negative electrode active material may be 7 µm, 7.5 µm, 8 µm, 8.5 µm, 9 µm, 9.5 µm, 10 µm, 10.5 µm, or 11 µm.

In an example, the particle size by volume Dᵥ50 of the negative electrode active material may be 12 µm, 12.5 µm, 13 µm, 13.5 µm, 14 µm, 14.5 µm, 15 µm, 15.5 µm, 16 µm, 16.5 µm, 17 µm, 17.5 µm, or 18 µm.

In an example, the particle size by volume Dᵥ90 of the negative electrode active material may be 20 µm, 20.5 µm, 21 µm, 21.5 µm, 22 µm, 22.5 µm, 23 µm, 23.5 µm, 24 µm, 24.5 µm, 25 µm, 25.5 µm, 26 µm, 26.5 µm, 27 µm, 27.5 µm, 28 µm, 28.5 µm, 29 µm, 29.5 µm, or 30 µm.

The "particle size" in this application has a meaning well known in the art and may be measured using instruments and methods well known in the art. In an example, the particle size of the negative electrode active material may be determined using a laser diffraction particle size analysis method. Specifically, the particle size of the negative electrode active material may be determined using a laser particle size analyzer (such as Malvern Master Size 3000) with reference to the standard GB/T 19077-2016.

In some embodiments, in an example in which the negative electrode active material includes graphite, a powder OI value of the negative electrode active material may be 2 to 7. This can increase a lithium ion intercalation and deintercalation rate of the negative electrode active material.

When the graphite is made into a negative electrode plate, an arrangement direction (orientation) of a graphite layered structure has significant influence on lithium ion migration. Since only end faces of the graphite can intercalate and deintercalate lithium ions, ideally, it is more favorable for lithium ion diffusion when the end faces of the graphite material in the negative electrode active material are perpendicular to a surface of the negative electrode plate. However, it is difficult to precisely control the orientation of each graphite particle during actual preparation. An orientation property of the graphite on the negative electrode plate can be tested by XRD. When a diffraction pattern test is performed on a horizontally placed negative electrode plate sample, a diffraction signal of a (110) crystal plane that can be collected comes from the graphite in the negative electrode active material layer perpendicular to the surface of the negative electrode plate, and diffraction signals of (002) and (004) crystal planes come from the graphite in the negative electrode active material parallel to the surface of the electrode plate. Therefore, the orientation property of the graphite electrode can be described by a ratio of a diffraction peak intensity (or integral area) of (002) or (004) to a diffraction peak intensity (or integral area) of (110). A formula is described as: OI=I(002)/I(110) or OI=I(004)/I(110), where OI (orientation index) represents the orientation property of the graphite in the negative electrode active material layer.

The powder OI value of the negative electrode active material being 2 to 7 is conducive to improving volume expansion and reaction kinetics of the graphite, enhancing the isotropy of the graphite, and effectively alleviating a volume expansion effect of the negative electrode plate during cycling, thereby further improving the cycling performance of the battery.

In an example, the OI value may be 2, 3, 4, 5, 6, or 7.

In some embodiments, a graphitization degree of the negative electrode active material is 93% to 95%. This can improve the electronic conductivity of the negative electrode active material.

Graphitization degree refers to a degree to which carbon atoms form a closely packed hexagonal graphite crystal structure, where a lattice size of the closely packed hexagonal graphite crystal structure closer to lattice parameters of ideal graphite indicates a higher graphitization degree.

The "graphitization degree" of the negative electrode active material has a meaning well known in the art, and may be tested using a method known in the art, for example, may be tested using an X-ray diffractometer (such as Bruker D8 Discover). For the test, reference may be made to JIS K 0131-1996 and JB/T 4220-2011 to measure a value of d₀₀₂, and then the graphitization degree is calculated according to a formula G=(0.344-d₀₀₂)/(0.344-0.3354)×100%, where d₀₀₂ is an interlayer spacing measured in nm in the graphite crystal structure. In an X-ray diffraction analysis test, Cu Kα ray is used as a radiation source, a scanning 2θ angle range of a radiation wavelength is 20° to 80°, and a scanning rate is 4°/min.

When the graphitization degree of the negative electrode active material is within the above range, the negative electrode active material has a regular structure, the crystal has fewer defects such as stacking faults and dislocations, resistance to electron migration is small, and the kinetic performance of the negative electrode active material is improved.

In an example, the graphitization degree of the negative electrode active material may be 93%, 93.5%, 94%, 94.5%, or 95%.

In some embodiments, a specific surface area of the negative electrode active material is 2.5 m²/g to 3.5 m²/g. This can further improve the processing performance of the negative electrode active material.

Specific surface area refers to a surface area per unit mass of a substance. When the particle size of the negative electrode active material is smaller, the specific surface area is larger, and correspondingly, there are more channels and shorter paths for lithium ion migration. The rate performance of the negative electrode active material is better, but more dispersant is required for dispersion. To be specific, when the specific surface area of the negative electrode active material is larger, the oil absorption value of the negative electrode active material is correspondingly increased. When the specific surface area of the negative electrode active material is within the above range, the negative electrode active material has good rate performance and relatively small oil absorption value, so that there is no need to additionally add excessive dispersant during preparation of the negative electrode slurry.

It can be understood that the specific surface area is affected by particle size distribution of the material. When the particle size of the negative electrode active material meets the foregoing definition, the specific surface area within the above range can be obtained.

The "specific surface area" of the negative electrode active material has a meaning well known in the art and can be measured using methods known in the art. For example, an American Micromeritics multi-station automatic specific surface area and porosity analyzer Gemini VII 2390 may be used. About 7 g of a negative electrode active material sample is placed in a 9 cc long tube with a bulb, degassed at 150°C for 15 min, and then tested in a main machine to obtain BET data.

In some embodiments, the negative electrode active material further includes a carbon coating layer, the carbon coating layer is located on at least part of a surface of the secondary particle, and the secondary particle is formed by bonding at least two primary particles, using a bonding material including a carbon material. This can improve the conductibility of the negative electrode active material.

The carbon coating layer provided can cover active sites on the surface of the graphite secondary particle, reduce occurrence of irreversible side reactions, reduce the specific surface area of the negative electrode active material, isolate the graphite secondary particle from the electrolyte, reduce direct contact between the secondary particle in the negative electrode active material and the electrolyte, and also restrain and buffer volume expansion of the graphite, thereby improving the cycling stability.

In an example, the carbon coating layer may include amorphous carbon. The amorphous carbon coating layer has a large interlayer spacing, which helps to increase a diffusion rate of lithium ions in the negative electrode active material, enhance large-current charge and discharge capability, and improve the performance of the battery at large rates.

In some embodiments, a tap density of the negative electrode active material is 0.9 g/cm³ to 1.15 g/cm³. This can improve the processing performance of the negative electrode active material.

Tap density refers to a mass per unit volume of powder in a container after tapping under specified conditions, measured in g/cm³. A specialized tap density instrument is used for measurement.

When the tap density of the negative electrode active material is within the above range, appropriate pores are present in the negative electrode active material. This is conducive to infiltration of the electrolyte, so that lithium ions are likely to intercalate into the negative electrode active material, thereby improving the rate performance.

Tap density can, to some extent, reflect the oil absorption value of the negative electrode active material. When there are fewer concave-convex structures on the surface of the negative electrode active material, the negative electrode active material can be attached more closely, and in this case, the negative electrode active material has a large tap density, and the oil absorption value of the negative electrode active material is reduced due to the fewer concave-convex structures.

It can be understood that the tap density is affected by the particle size of the material. When the particle size of the negative electrode active material meets the foregoing definition, the tap density within the above range can be obtained.

In some embodiments, a compacted density of the negative electrode active material under a pressure of 50000 N is 1.75 g/cm³ to 1.85 g/cm³. This can increase the energy density of a negative electrode active material layer containing such negative electrode active material.

The secondary particles are formed by bonding primary particles. Since the binder does not have lithium intercalation and deintercalation sites, a gram capacity of the secondary particles is slightly lower than that of the primary particles, and a compacted density of the secondary particles is higher than that of the primary particles. Generally, a larger compacted density of the negative electrode active material indicates a larger energy density of the battery. When the compacted density of the negative electrode active material meeting the foregoing proportion of the secondary particles under the pressure of 50000 N is within the above range, the negative electrode plate has a small thickness after rolling, the battery has a large volumetric energy density, and pores in the negative electrode plate are retained. This is conducive to lithium ion intercalation and deintercalation.

In some embodiments, the gram capacity of the negative electrode active material is 355 mAh/g to 360.5 mAh/g. Thus, the negative electrode active material has a large gram capacity.

The secondary particles are formed by bonding primary particles. Since the binder does not have lithium intercalation and deintercalation sites and cannot contribute to the gram capacity, the gram capacity of the secondary particles is slightly lower than that of the primary particles. When the gram capacity of the negative electrode active material is 355 mAh/g to 360.5 mAh/g, there is a small proportion of binder for bonding the primary particles in the negative electrode active material, and the negative electrode active material still has a large gram capacity.

In some embodiments, when the negative electrode active material has a carbon coating layer on the surface, an Id/Ig peak intensity ratio of the Raman spectrum of the negative electrode active material is 0.20 to 0.40.

During Raman scattering analysis of the negative electrode active material, scattering peaks are present at Raman shifts of 1320 cm⁻¹ to 1410 cm⁻¹ and 1550 cm⁻¹ to 1650 cm⁻¹, respectively. To be specific, in the Raman spectrum of the negative electrode active material, a scattering peak of a D frequency band of carbon (referred to as a D peak) is present at a Raman shift of 1320 cm⁻¹ to 1410 cm⁻¹, and a scattering peak of a G frequency band of carbon (referred to as a G peak) is present at a Raman shift of 1550 cm⁻¹ to 1650 cm⁻¹. A ratio of a peak intensity Id of the D peak to a peak intensity Ig of the G peak can reflect the degree of defects in the negative electrode active material. When the Id/Ig peak intensity ratio of the Raman spectrum of the negative electrode active material is within the above range, there are more defect sites on the surface of the negative electrode active material, which helps to improve the performance of the battery at large rates.

In some embodiments, a porosity of the negative electrode active material layer is 18% to 35%. This is conducive to infiltration of the electrolyte into the negative electrode plate.

In an example, the porosity of the negative electrode active material layer may be 18%, 19%, 20%, 21%, 22%, 23%, 24%, 25%, 26%, 27%, 28%, 29%, 30%, 31%, 32%, 33%, 34%, or 35%.

When the porosity of the negative electrode active material layer is within the above range, the negative electrode active material layer has more pores, which is conducive to the infiltration of the electrolyte into the negative electrode plate, exhibiting good ion transport characteristics, and achieving large energy density of the negative electrode slurry.

In some embodiments, a compacted density of the negative electrode active material layer is 1.60 g/cm³ to 1.75 g/cm³. This is conducive to infiltration of the electrolyte into the negative electrode plate.

In an example, the compacted density of the negative electrode active material layer may be 1.60 g/cm³, 1.61 g/cm³, 1.62 g/cm³, 1.63 g/cm³, 1.64 g/cm³, 1.65 g/cm³, 1.66 g/cm³, 1.67 g/cm³, 1.68 g/cm³, 1.69 g/cm³, 1.70 g/cm³, 1.71 g/cm³, 1.72 g/cm³, 1.73 g/cm³, 1.74 g/cm³, or 1.75 g/cm³.

The compacted density of the negative electrode active material layer is related to the porosity of the negative electrode active material layer. When the compacted density of the negative electrode active material layer is within the above range, the porosity of the negative electrode active material layer can meet the foregoing requirements.

In some embodiments, a surface density of the negative electrode active material layer is 5 mg/cm² to 10 mg/cm².

For example, the negative electrode current collector includes two opposite surfaces in its thickness direction, and the negative electrode active material layer is disposed on either or both of the two opposite surfaces of the negative electrode current collector.

In some embodiments, the negative electrode current collector may be a metal foil or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, in addition to the above negative electrode active materials, the negative electrode active material layer may also use negative electrode active materials for batteries well known in the art.

In an example, the negative electrode active material may further include at least one of the following materials: artificial graphite, natural graphite, soft carbon, hard carbon, a silicon-based material, a tin-based material, and lithium titanate. The silicon-based material includes at least one of elemental silicon, silicon oxide, silicon-carbon composite, silicon-nitrogen composite, and silicon alloy. The tin-based material includes at least one of elemental tin, tin-oxygen compound, and tin alloy. However, this application is not limited to these materials, and other conventional materials that can be used as negative electrode active materials for batteries may alternatively be used. One of these negative electrode active materials may be used alone, or more than two of them may be used in combination.

In some embodiments, the negative electrode active material layer further optionally includes a binder. The binder includes at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent includes at least one of superconducting carbon, acetylene black, carbon black, Ketjen black, carbon dots, carbon nanotubes, graphene, and carbon nanofiber.

In some embodiments, the negative electrode active material layer further optionally includes a dispersant, for example, sodium carboxymethyl cellulose (CMC-Na) and polyacrylic acid.

According to a second aspect, this application proposes a method for preparing the foregoing battery, so that the foregoing battery with good rate performance can be prepared using a simple method. Specifically, a method for preparing a negative electrode active material includes the following steps.

S100. Mix graphite primary particles with a binder and perform a first heat treatment.

In some embodiments, in this step, the graphite primary particles are mixed with the binder, and the first heat treatment is performed to obtain pre-bonded secondary particles.

In an example, the graphite primary particles and the binder may be mixed, stirred and heated in a high-temperature reaction kettle, and then cooled to obtain the pre-bonded secondary particles. Further, the pre-bonded secondary particles are subjected to a shaping treatment. Through the shaping treatment, the pre-bonded secondary particles that are not firmly bonded can be dispersed, reducing cracking and crushing of the secondary particles in a subsequent rolling process.

In some embodiments, a method for obtaining the graphite primary particles is not particularly limited. For example, providing the graphite primary particles may include: performing a pulverization treatment and a second classification treatment on a raw material to obtain the graphite primary particles, where the raw material includes at least one of raw petroleum coke and raw needle coke.

Through the pulverization treatment, a centimeter-level raw material is crushed into a micron-level raw material, and through the second classification treatment, and a raw material with a small particle size can be classified and screened to remove fine powder with an excessively small particle size in the raw material. Further, a shaping treatment may be performed between the pulverization treatment and the second classification treatment to significantly reduce an aspect ratio of the graphite particles and increase a degree of sphericity thereof, thereby enhancing the mechanical properties and volume utilization of the graphite, improving the particle shape, particle size distribution, and surface characteristics of the primary particle powder, and improving the particle size uniformity of the graphite primary particles.

In an example, the second classification treatment may specifically include a classification step and a screening step.

In an example, the pulverization treatment, shaping treatment, and second classification treatment of the raw material can be performed in a continuous device.

When the shaping treatment is performed at an appropriate frequency, the shaping treatment can make the surface morphology of the graphite primary particles more rounded and achieve appropriate graphite primary particles.

In some embodiments, a feeding frequency for the pulverization treatment is 10 Hz to 35 Hz; and a classification frequency for the second classification treatment is 30 Hz to 50 Hz.

When the pulverization treatment and the second classification treatment of the raw material are performed in a continuous device, a percentage of fine powder in the graphite primary particles can be effectively controlled by controlling the feeding frequency for the pulverization treatment and the classification frequency for the second classification treatment. When the feeding frequency for the pulverization treatment and the classification frequency for the second classification treatment are within the above ranges, the feeding frequency is appropriate, and the raw material particles can be fully crushed, and the fine powder generated can be effectively removed in the subsequent second classification treatment. In addition, an overall particle size of the graphite primary particles is not too large to affect the kinetic performance of the negative electrode active material.

In some embodiments, a true density of the raw material is 1.35 g/cm³ to 1.50 g/cm³.

When the true density of the raw material is 1.35 g/cm³ to 1.50 g/cm³, the raw material has a relatively dense bulk phase and fewer pores, and the gram capacity of the graphite secondary particles obtained after the second heat treatment process is larger.

In some embodiments, a volatile percentage in the raw material is 4% to 7%. A sulfur percentage in the raw material is less than or equal to 2%.

When the volatile percentage and sulfur percentage in the raw material are within the above ranges, the volatile percentage in the raw material is appropriate, the sulfur percentage is low, few impurity components are in the raw material, crystal development tends to be anisotropic, and a preferable gram capacity is achieved.

In some embodiments, the binder may be a solid binder. For example, the binder includes at least one of asphalt and resin. The solid binder contributes to the blending with the primary particles, is likely to bond with the primary particles, and has strong adhesivity, thereby improving a bonding effect of the binder on the graphite primary particles.

In some embodiments, a coking value of the binder is 60% to 70%.

The primary particles are mainly bonded by the binder to form the secondary particles. When the coking value of the binder is within the above range, an appropriate amount of carbon is left in the binder in the first heat treatment process, the secondary particles have a relatively compact structure and an appropriate oil absorption value, and the quantity proportion of the secondary particles can be increased by adding only a small amount of binder.

In some embodiments, a mass ratio of the binder to the graphite primary particles is (7-10): 100.

When the mass ratio of the binder to the graphite primary particles is within the above range, full bonding is implemented between the graphite primary particles, the quantity proportion of secondary particles in the negative electrode active material is relatively high, the structure of the pre-bonded secondary particles is relatively compact, and the negative electrode active material obtained ultimately has a large compacted density.

In some embodiments, a particle size of the binder is 4 µm to 8 µm.

When the particle size of the binder is within the above range, the particle size of the binder is appropriate, and the binder can provide more adhesive surfaces, resulting in more effective bonding between the primary particles; the quantity proportion of the secondary particles in the negative electrode active material is relatively high, and the binder is not prone to agglomeration, cannot be dispersed, and thus fails to exert the bonding function; and the binder has a small steric hindrance, and can effectively come into contact with the graphite primary particles to realize bonding.

In some embodiments, the first heat treatment is performed at a temperature of 600°C to 800°C, and the first heat treatment is performed for 1 h to 4 h. This helps to improve pre-bonding of the graphite primary particles by the binder.

Through the first heat treatment, the primary particles can be bonded using a binder. The binder at a bonding site undergoes a pyrolysis reaction at a temperature for the first heat treatment to form carbon, so as to alleviate volume shrinkage stress caused by thermal decomposition of the primary particles during the subsequent second heat treatment process, thereby reducing structural collapse of the graphite secondary particles caused by the volume shrinkage stress.

When the time and temperature for the first heat treatment are within the above ranges, carbon residues formed by the binder at the bonding site have fewer volatiles, stable bonding is formed between the primary particles, and the first heat treatment takes a shorter time and realizes low energy consumption.

S200. Perform a second heat treatment and a first classification treatment on the pre-bonded secondary particles.

In some embodiments, the pre-bonded secondary particles are subjected to a second heat treatment and a first classification treatment to obtain secondary particles.

In an example, the pre-bonded secondary particles may be subjected to a second heat treatment in an Acheson graphitization furnace and subjected to a first classification treatment after cooling so as to be classified and screened, realizing percentage control of fine powder, thereby obtaining graphitized secondary particles.

In some embodiments, the second heat treatment is performed at a temperature of 2800°C to 3300°C, and the second heat treatment is performed for 36 h to 72 h. This helps to improve the bonding effect of the binder on the graphite primary particles.

When the time and temperature for the second heat treatment are within the above ranges, the heat treatment time is appropriate, the energy consumption is low, and a thermal capacity is high. This contributes to full graphitization of the binder.

In the related art, the graphite secondary particles and a solid-phase coating agent are mixed, carbonized, and screened to obtain a negative electrode active material with a surface carbon coating layer. However, solid-phase mixing can only make the secondary particles and a coating agent uniformly dispersed after mixing, but the materials need to be transferred from a mixing device to a carbonization line. During transportation and transfer, the coating agent and the graphite secondary particles are dispersed unevenly due to differences in density, particle size, and the like, which leads to carbonization, thereby causing an irregular surface morphology of the particles, formation of a large number of concave-convex structures, and an excessively large oil absorption value of the negative electrode active material prepared. Further, since the carbonization process after the graphite secondary particles and the coating agent are mixed is static, fine powder impurities in the secondary particles tend to self-agglomerate due to their small size to form convex structures on the surfaces of the secondary particles. Thus, in a subsequent coating process, the fine powder agglomerating together is bonded to the surfaces of the secondary particles through the coating agent to form protrusions, resulting in poor surface morphology regularity of the secondary particles, increasing the oil absorption value of the negative electrode active material, and requiring more dispersant for dispersion.

In some embodiments, through the first classification treatment, fine powder in the secondary particle powder can be screened and removed, effectively reducing convex surfaces formed in the subsequent surface coating process.

In some embodiments, when the first classification treatment is performed in a continuous device, a percentage of the fine powder in the graphite secondary particles can be effectively controlled by controlling a feeding frequency and a classification frequency for the first classification treatment.

In some embodiments, the feeding frequency for the first classification treatment is 4 Hz to 10 Hz. Thus, the feeding frequency is appropriate, so that the fine powder can be effectively removed, improving the processing performance of the negative electrode active material.

In an example, the feeding frequency for the first classification treatment may be 4 Hz, 5 Hz, 6 Hz, 7 Hz, 8 Hz, 9 Hz, or 10 Hz.

In some embodiments, the classification frequency for the first classification treatment is 30 Hz to 50 Hz. Thus, the fine powder can be effectively removed, improving the processing performance of the negative electrode active material. In addition, an overall particle size of the graphite secondary particles is not too large to affect the kinetic performance of the negative electrode active material.

In an example, the feeding frequency for the first classification treatment may be 30 Hz, 35 Hz, 40 Hz, 45 Hz, or 50 Hz.

When the feeding frequency and classification frequency for the first classification treatment are within the above ranges, the fine powder in the powder can be screened through the first classification treatment, so that the overall particle size of the secondary particles in the negative electrode active material is appropriate, and good kinetic performance is achieved. Thus, the percentage of the fine powder in the negative electrode active material is reduced, the particle size Dᵥ1 of the negative electrode active material is slightly increased, the particle size Dᵥ50 of the negative electrode active material is appropriate, more uniform bonding is achieved between the primary particles in the negative electrode active material, and a large number of secondary particles are present in the negative electrode active material, achieving good kinetic performance of the negative electrode active material.

In some embodiments, the first classification treatment may specifically include a classification step and a screening step, where a sieve used in the screening step may have 300 meshes to 350 meshes.

When the mesh quantity of the sieve is within the above range, the secondary particles obtained after screening have an appropriate particle size, which not only provides a large gram capacity but also reduces occurrence of coating scratches during processing.

In some embodiments, the method for preparing the negative electrode active material further includes the following step.

Step S300: Mix the secondary particles with a liquid-phase coating agent and perform a third heat treatment.

In some embodiments, the secondary particles and the liquid-phase coating agent are stirred in a mechanical fusion machine, carbonized at a high temperature, cooled to room temperature, and then screened to obtain the negative electrode active material with a required particle size.

The carbon coating layer provided can cover active sites on the surface of the graphite secondary particle, reduce occurrence of irreversible side reactions, reduce the specific surface area of the negative electrode active material, isolate the graphite secondary particle from the electrolyte, reduce direct contact between the secondary particle in the negative electrode active material and the electrolyte, and also restrain and buffer volume expansion of the graphite, thereby improving the cycling stability.

Compared with a solid-phase coating agent, the liquid-phase coating agent has good fluidity, spreads more evenly on the surface of the secondary particle, form fewer surface protrusions, and can better cover the surface of the secondary particle. Further, the mixing of the secondary particles and the liquid-phase coating agent and the third heat treatment are usually performed using different devices. During transportation and transfer of materials, the liquid-phase coating agent can stably coat the surface of the graphite secondary particle, with high dispersion uniformity.

In some embodiments, the liquid-phase coating agent includes at least one of asphalt and resin with a viscosity of less than or equal to 500 mPa·s. Therefore, the liquid-phase coating agent has a good coating effect on the secondary particles.

A lower viscosity of the liquid-phase coating agent results in better fluidity, so that more sufficient contact is formed between the graphite secondary particles and the liquid-phase coating agent and fewer surface protrusions are formed after coating, achieving good processing performance of the negative electrode active material.

It can be understood that the viscosity of the liquid-phase coating agent is related to a molecular weight. Specifically, when the viscosity of the liquid-phase coating agent is too low, the molecular weight of the liquid-phase coating agent is too small. In this case, a coking value of the liquid-phase coating agent is too small.

In some embodiments, a mass ratio of the liquid-phase coating agent to the secondary particles is (2-10):100.

The main function of surface coating is to cover the active sites on the surface of the secondary particle and reduce the occurrence of irreversible side reactions, so that the modified secondary particles in the negative electrode active material retain the advantages of high capacity and low potential of graphite materials. The carbon coating layer on the surface of the graphite has good electrolyte compatibility, effectively inhibiting adverse effects such as graphite peeling, pulverization, and volume expansion caused by a solvation effect. However, the surface carbon coating layer has a limited effect in improving the gram capacity of the negative electrode active material, and an excessively thick surface carbon coating layer significantly reduces the gram capacity of the negative electrode active material. When the mass ratio of the liquid-phase coating agent to the secondary particles is (2-10):100, the negative electrode active material has good electrolyte resistance and high gram capacity.

In some embodiments, the coking value of the liquid-phase coating agent is 40% to 70%.

When the coking value of the liquid-phase coating agent is within the above range, under a condition that an amount of carbon formed by the liquid-phase coating agent after heat treatment remains unchanged, an appropriate percentage of liquid-phase coating agent is added, has a large number of contact sites with the secondary particles, and fully coats the surfaces of the secondary particles. In addition, only a small amount of volatiles need to be discharged during carbonization of the liquid-phase coating agent, greatly reducing the possibility of risk caused by reaction between an exhaust port of a carbonization furnace and the air.

In some embodiments, the third heat treatment is performed at a temperature of 1000°C to 1200°C, and the third heat treatment is performed for 15 h to 30 h. This helps to form an amorphous carbon coating layer.

When the temperature and time for the third heat treatment are within the above ranges, the heat treatment time is appropriate, and a thermal field in the carbonization furnace has high uniformity, which is conducive to improving the uniformity of the carbon coating layer. In addition, a crystal structure of the carbon coating layer exhibits a high degree of structural disorder and is similar to amorphous carbon, which is conducive to improving the kinetic performance of the negative electrode active material.

In some embodiments, the negative electrode plate may be prepared in the following manner: The constituents for preparing the negative electrode plate, for example, the negative electrode active material, the conductive agent, the binder, the dispersant, and any other constituents, are dispersed in a solvent (for example, deionized water) to form a negative electrode slurry; and the negative electrode slurry is applied onto a negative electrode current collector, followed by processes such as drying and cold pressing, to obtain the negative electrode plate.

In some embodiments, the mass fraction of the dispersant in the negative electrode slurry is 0.8% to 1.2%.

Typically, a battery includes a positive electrode plate, a negative electrode plate, an electrolyte, and a separator. During charging and discharging of the battery, metal active ions intercalate and deintercalate back and forth between the positive electrode plate and the negative electrode plate. The electrolyte has a function of conducting ions between the positive electrode plate and the negative electrode plate. The separator is disposed between the positive electrode plate and the negative electrode plate, to mainly prevent short circuits between a positive electrode and a negative electrode and to allow the metal active ions to pass through.

In some embodiments, the metal active ions may be lithium ions, and the battery may be a lithium-ion battery.

In some embodiments, the metal active ions can be sodium ions, and the battery may be a sodium-ion battery.

### [Positive electrode plate]

In an example, the positive electrode current collector includes two opposite surfaces in its thickness direction, and the positive electrode active material layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, under a condition that the battery is a lithium-ion battery, the positive electrode active material may be a well-known positive electrode active material used for lithium-ion batteries in the art.

In an example, the positive electrode active material may include at least one of the following materials: olivine-structured lithium-containing phosphate, lithium transition metal oxide, and respective modified compounds thereof. However, this application is not limited to these materials, and may alternatively use other conventional materials that can be used as positive electrode active materials for batteries. One of these positive electrode active materials may be used alone, or two or more of them may be used in combination. An example of the lithium transition metal oxide may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.8}Co_{0.15}Al_{0.05}O₂), and modified compounds thereof. An example of the olivine-structured lithium-containing phosphate may include but is not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. The modified compounds of the foregoing materials may be obtained through doping modification and/or surface coating modification to the materials.

Charging and discharging processes of the battery are accompanied by intercalation, deintercalation, and consumption of Li, and a molar percentage of Li in the battery varies when the battery is discharged to different states. In the enumeration of the positive electrode active materials in this application, the molar percentage of Li is in an initial state of the material, that is, a state before the material is fed. When the positive electrode active material is applied to a battery system, the molar percentage of Li changes after a charge-discharge cycle.

In the enumeration of the positive electrode active materials in this application, a molar percentage of O is only a theoretical state value. Lattice oxygen release causes changes in the molar percentage of oxygen, leading to fluctuation of an actual molar percentage of O.

In some embodiments, under the condition that the battery is a sodium-ion battery, the positive electrode active material may be a well-known positive electrode active material used for sodium-ion batteries in the art.

In an example, the positive electrode active material may include at least one of the following materials: a sodium transition metal oxide, a polyanionic compound, a Prussian blue sodium compound, and respective modified compounds thereof. However, this application is not limited to these materials, and may alternatively use other conventional materials that can be used as positive electrode active materials for batteries. The modified compounds of the foregoing materials may be obtained through doping modification and/or surface coating modification to the materials.

In some embodiments, a transition metal in the sodium transition metal oxide may be at least one of Ti, V, Mn, Co, Ni, Fe, Zn, V, Zr, Ce, Cr, and Cu. A chemical formula of the sodium transition metal oxide may satisfy NaₓMO₂, where M includes at least one of Ti, V, Mn, Co, Ni, Fe, Zn, V, Zr, Ce, Cr, and Cu, and 0<x≤ 1.

In some embodiments, the polyanionic compound may be a compound having sodium ions, transition metal ions, and a tetrahedral (YO₄)ⁿ⁻ anion unit. The transition metal may include at least one of Mn, Fe, Ni, Co, Cr, Cu, Ti, Zn, V, Zr, and Ce; Y may include at least one of P, S, and Si; and n represents a valence state of (YO₄)ⁿ⁻.

In some embodiments, the polyanionic compound may alternatively be a compound including sodium ions, transition metal ions, a tetrahedral (YO₄)ⁿ⁻ anion unit, and halogen anions. The transition metal may include at least one of Mn, Fe, Ni, Co, Cr, Cu, Ti, Zn, V, Zr, and Ce; Y may include at least one of P, S, and Si; n represents a valence state of(YO₄)ⁿ⁻; and the halogen may include at least one of F, Cl, and Br.

In some embodiments, the polyanionic compound may alternatively be a compound including sodium ions, a tetrahedral (YO₄)ⁿ⁻ anion unit, a polyhedral (ZO_{y})^{m+} unit, and optional halogen anions. M may include at least one of Mn, Fe, Ni, Co, Cr, Cu, Ti, Zn, V, Zr, and Ce; Y may include at least one of P, S, and Si; n represents a valence state of (YO₄)ⁿ⁻; Z represents a transition metal; m represents a valence state of (ZO_{y})^{m+}; and the halogen may include at least one of F, Cl, and Br.

In an example, the polyanionic compound may satisfy at least one of chemical formulas NaFePO₄, Na₃V₂(PO₄)₃ (sodium vanadyl phosphate, NVP for short), Na₄Fe₃(PO₄)₂(P₂O₇), NaM'PO₄F (M' includes at least one of V, Fe, Mn, and Ni), and Na₃(VO_{y})₂(PO₄)₂F_{3-2y} (0≤y≤1).

In some embodiments, the Prussian blue compound may be a compound including sodium ions, transition metal ions, and cyanide ions (CN⁻). The transition metal may include at least one of Mn, Fe, Ni, Co, Cr, Cu, Ti, Zn, V, Zr, and Ce.

In an example, the Prussian blue compound may satisfy a chemical formula NaₐMe_{b}Me'_{c}(CN)₆, where Me and Me' each independently include at least one of Ni, Cu, Fe, Mn, Co, and Zn, 0<a≤2, 0<b<1, and 0<c<1.

Charging and discharging processes of the battery are accompanied by intercalation, deintercalation, and consumption of Na, and a molar percentage of Na in the battery varies when the battery is discharged to different states. In the enumeration of the positive electrode active materials in this application, the molar percentage of Na is in an initial state of the material, that is, a state before the material is fed. When the positive electrode active material is applied to a battery system, the molar percentage of Na changes after a charge-discharge cycle.

In the enumeration of the positive electrode active materials for a sodium-ion battery in this application, a molar percentage of O is only a theoretical state value. Lattice oxygen release causes changes in the molar percentage of oxygen, leading to fluctuation of an actual molar percentage of O.

In some embodiments, the positive electrode active material layer further optionally includes a binder.

For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode active material layer further optionally includes a conductive agent.

For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto a positive electrode current collector, followed by processes such as drying and cold pressing, to obtain the positive electrode plate.

### [Electrolyte]

The electrolyte has a function of conducting ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt includes at least one of lithium hexafluorophosphate, lithium tetrafluoroborate, lithium perchlorate, lithium hexafluoroarsenate, lithium bis(fluorosulfonyl)imide, lithium bis-trifluoromethanesulfon imide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some embodiments, the solvent includes at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methanesulfonate, and diethyl sulfone.

In some embodiments, the electrolyte solution further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

In some embodiments, the battery further includes a separator. The separator is not particularly limited in this application, and any well-known porous separator with good chemical stability and mechanical stability can be selected.

### [Separator]

In some embodiments, the separator is made of a material including at least one of glass fiber, non-woven fabric, polyethylene, polypropylene, and polyvinylidene fluoride. The separator may be a single-layer film or a multi-layer composite film. This is not particularly limited. When the separator is a multi-layer composite film, all layers may be made of the same or different materials. This is not particularly limited.

The battery of this application is in a form of a battery cell, a battery module, or a battery pack. The following describes the battery cell, battery module, and battery pack of this application with appropriate reference to the accompanying drawings.

In some embodiments, the positive electrode plate, the negative electrode plate, and the separator can be made into an electrode assembly through winding or lamination.

In some embodiments, the battery may include an outer package. The outer package may be used for packaging the foregoing electrode assembly and electrolyte.

In some embodiments, the outer package of the battery may be a hard shell, for example, a hard plastic shell, an aluminum shell, or a steel shell. The outer package of the battery may alternatively be a soft pack, for example, a soft pouch. The material of the soft pack may be plastic, for example, may include polypropylene, polybutylene terephthalate, polybutylene succinate, and the like.

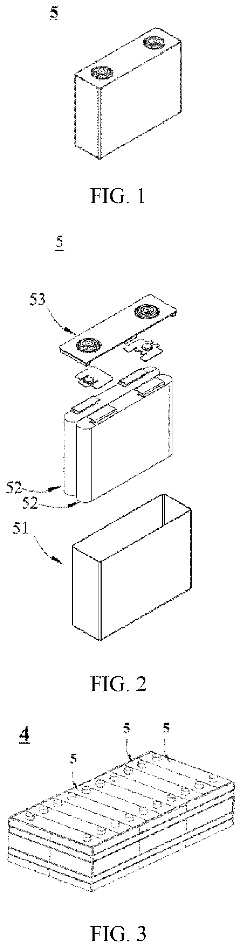

The battery is not limited to any particular type in this application, and may be cylindrical, square, or in any other shape. FIG. 1 shows a rectangular battery cell 5 as an example.

In some embodiments, referring to FIG. 2, the outer package may include a shell 51 and a top cover assembly 53. The shell 51 may include a base plate and a side plate connected onto the base plate, and the base plate and the side plate enclose an accommodating cavity. The shell 51 has an opening communicating with the accommodating cavity, and the top cover assembly 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte infiltrates the electrode assembly 52. The battery cell may include one or more electrode assemblies 52, and persons skilled in the art can select based on specific actual needs.

In some embodiments, a battery may be assembled into a battery module, and the battery module may include one or more batteries. A specific quantity may be selected by persons skilled in the art based on use and capacity of the battery module.

FIG. 3 shows a battery module 4 as an example. Referring to FIG. 3, in the battery module 4, a plurality of battery cells 5 may be sequentially arranged in a length direction of the battery module 4. Certainly, the battery cells may alternatively be arranged in any other manner. Further, the plurality of battery cells 5 may be fastened through fasteners.

Optionally, the battery module 4 may further include a housing with an accommodating space, and the plurality of battery cells 5 are accommodated in the accommodating space.

In some embodiments, the battery module may be further assembled into a battery pack, and the battery pack may include one or more battery modules. A specific quantity may be selected by persons skilled in the art based on use and capacity of the battery pack.

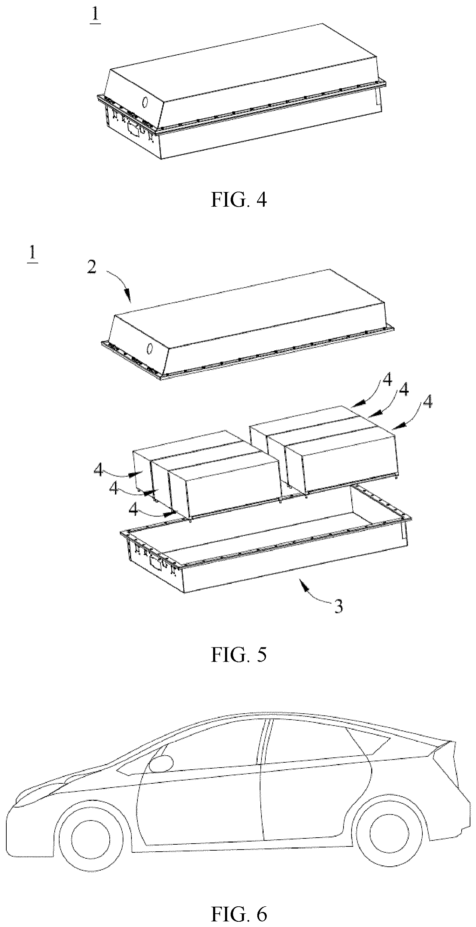

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box body 2 and a lower box body 3. The upper box body 2 can cover the lower box body 3 to form an enclosed space for accommodating the battery modules 4. The plurality of battery modules 4 may be arranged in the battery box in any manner.

According to a third aspect, this application provides an electric apparatus including the foregoing battery and/or a battery prepared using the foregoing method. Thus, the electric apparatus has all the features and advantages of the foregoing battery and preparation method. Details are not described herein again.

The battery, the battery module, or the battery pack can be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

For the electric apparatus, a battery, a battery module, or a battery pack may be selected according to requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the battery, a battery pack or a battery module may be used.

In another example, the apparatus may be a mobile phone, a tablet computer, a notebook computer, or the like. The apparatus usually needs to be light and thin, and the battery may be used as a power source.

The following describes the solutions of this application using specific embodiments. It should be noted that the following embodiments are only for illustrating this application and should not be considered as limiting the scope of this application. Examples whose technical solutions or conditions are not specified are made in accordance with technical solutions or conditions described in literature in the art, or made in accordance with product instructions. The reagents or instruments used are all conventional products that are commercially available if no manufacturer is indicated.

### Example 1

### Preparation of negative electrode active material:

Raw needle coke with a volatile percentage of 4.5%, a true density of 1.40 g/cm³, and a sulfur percentage of 0.1% was selected as a raw material, and a pulverization treatment, a shaping treatment, and a second classification treatment were performed to remove fine powder to obtain graphite primary particles, where a feeding frequency for the pulverization treatment was 10 Hz, and a classification frequency for the second classification treatment was 40 Hz.

Solid asphalt with a coking value of 67% was selected as a binder, the foregoing graphite primary particles were mixed with the solid asphalt at a mass ratio of 7:100, and the mixture was stirred and heated at 650°C in a high-temperature reaction kettle for 2 h, and then cooled and shaped to obtain pre-bonded secondary particles.

The foregoing pre-bonded secondary particles were heated at a high temperature of 3000°C in an Acheson graphitization furnace for 48 h, cooled, and then subjected to a first classification treatment to obtain secondary particles, where a feeding frequency for the first classification treatment was 10 Hz, a classification frequency for the first classification treatment was 45 Hz, and a sieve used in the first classification treatment had 300 meshes.

Resin with a coking value of 60% and a viscosity of 500 mPa·s was used as a liquid-phase coating agent. The secondary particles and the liquid-phase coating agent were mixed at a mass ratio of 3:100 in a mechanical fusion machine, and carbonized at a high temperature of 1100°C for 15 h to form a carbon coating layer, and the carbon coating layer was cooled to room temperature and then screened to obtain a negative electrode active material.

The foregoing negative electrode active material was assembled into a battery, specifically including the following steps.

Negative electrode plate: The negative electrode active material, a conductive agent conductive carbon, a stabilizer sodium carboxymethyl cellulose, and a binder SBR at a mass ratio of 96.8:0.7:1.2:1.3 were dispersed in deionized water to form a negative electrode slurry; the negative electrode slurry was uniformly applied onto both side surfaces of a negative electrode current collector copper foil, with a coating weight of 0.160 g/1540 mm²; and the copper foil was dried and then compacted using a cold press to make the negative electrode film layer have a compacted density of 1.60 g/cm³.

Positive electrode plate: A positive electrode active material LiNi_{0.8}Co_{0.1}Mn_{0.1}O₂, a conductive agent Super-P, and a binder polyvinylidene fluoride at a mass ratio of 97.4:1.5:1.1 were stirred and dispersed in N-methylpyrrolidone to form a positive electrode slurry; the positive electrode slurry was applied onto a positive electrode current collector aluminum foil, with a coating weight of 0.238 g/1540 mm²; and the aluminum foil was compacted using a cold press and then slit to obtain the positive electrode plate, where a compacted density of the positive electrode plate was 3.5 g/cm³.

Separator: A polyethylene porous film with a thickness of 12 µm was selected.

Electrolyte: At 25°C, ethylene carbonate (EC), ethyl methyl carbonate (EMC), and diethyl carbonate (DEC) were mixed at a volume ratio of 1:1:1 to obtain a mixed solvent, and then LiPF₆ was dissolved in the mixed solvent to obtain the electrolyte, where a concentration of LiPF₆ was 1 mol/L.

Battery assembly: The prepared negative electrode plate, separator, and positive electrode plate were stacked in sequence, with the separator located between the positive and negative electrode plates for isolation, and then wound to obtain a jelly roll; and then the jelly roll was inserted into a battery shell, followed by processes such as baking, electrolyte injection, standing, sealing, formation, and capacity grading to obtain a battery.

### Example 2

Example 2 was the same as Example 1 except that the feeding frequency for the first classification treatment was 5 Hz.

### Example 3

Example 3 was the same as Example 2 except that the classification frequency for the first classification treatment was 30 Hz.

### Example 4

Example 4 was the same as Example 3 except that the coking value of the liquid-phase coating agent was 45%.

### Example 5

Example 5 was the same as Example 4 except that the viscosity of the liquid-phase coating agent was 225 mPa·s.

### Comparative example 1

Comparative example 1 was the same as Example 1 except that the first classification treatment was not performed.

### Comparative example 2

Comparative example 2 was the same as Example 1 except that the first classification treatment was not performed, asphalt was used as a solid-phase coating agent to form a carbon coating layer, the coking value of the solid-phase coating agent was 60%, and a softening point of the solid-phase coating agent was 200°C.

### Comparative example 3

Comparative example 3 was the same as example 3 except that in Comparative example 3, the solid-phase coating agent in Comparative example 2 was used to form the carbon coating layer.

The negative electrode active materials in the foregoing examples and comparative examples were tested as follows, and test results are shown in Table 1.

Oil absorption value: 100 g of the negative electrode active material was placed at a feeding opening of an oil absorption value tester, and dibutyl phthalate was automatically titrated by a device and flowed to the negative electrode active material until the negative electrode active material became a semi-plastic agglomerate. An amount of the dibutyl phthalate added at that moment (a mL) was recorded, and then the oil absorption value of the negative electrode active material was obtained as a mL/100g.

Proportion of secondary particles: laying and sticking the negative electrode active material on a conductive adhesive to form a sample with a size of length×width=6 cm×1.1 cm; and using a scanning electron microscope (such as ZEISS Sigma 300) to test the particle morphology. For the test, reference might be made to JY/T010-1996. To ensure accuracy of the test results, a plurality of (for example, 20) different regions might be randomly selected in a to-be-tested sample for a scanning test, and at a specific magnification rate (for example, 1000 times), a quantity proportion of the secondary particles in each test region in a total quantity of particles was calculated as a quantity proportion of the secondary particles in the region. An average value of test results of the plurality of test regions was used as the quantity proportion of the secondary particles in the negative electrode active material.

Processing performance: The negative electrode active material, a conductive agent conductive carbon, a stabilizer sodium carboxymethyl cellulose, and a binder SBR at a mass ratio of 96.8:0.7:1.2:1.3 were dispersed in deionized water to form a negative electrode slurry. 500 mL negative electrode slurry was filtered through a 150-mesh stainless screen, and a time required for obtaining 300 mL slurry through filtration was recorder, where a shorter timer indicates easier filtration and better processing performance.

The batteries in the foregoing examples and comparative examples were tested as follows, and test results are shown in Table 1.

Test for fasting charging capability at 25°C: The battery prepared was placed at a room temperature of 25°C, constant-current charged to 4.25 V at a rate of 0.33C, constant-voltage charged to a current of 0.05C, left standing for 5 min, and then constant-current discharged to 2.5 V at 0.33C, and a constant-current discharge capacity was recorded as an initial capacity C₀. The battery was charged at constant currents of 0.5C₀, 1C₀, 1.5C₀, 2C₀, 2.5C₀, 3C₀, and 3.5C₀ in sequence to a full battery potential of 4.25 V or a negative electrode cut-off potential of 0 mV (it was considered that charging was completed when any one of the two conditions was met). After each charging was completed, the battery was discharged to 2.5 V at 0.33C₀. At every 10% SOC interval (from 10% SOC to 80% SOC), corresponding negative electrode potentials at different charging rates were recorded, and a rate-negative electrode potential curve at different SOCs was plotted. After linear fitting, corresponding charging rates at different SOCs when the negative electrode potential was 0 mV were obtained, and denoted as Cₓ(x=2 to 8). A charging time T (min) for the battery to be charged from 10% SOC to 80% SOC was obtained through calculation according to a formula (1/C₂+1/C₃+1/C₄+1/C₅+1/C₆+1/C₇+1/C₈)×0.1×60. A shorter time indicates better fast charging performance of the battery.

Cycling performance (capacity retention rate at 45 Deg at 1C/1C after 1000 cycles): At 45°C, the battery was charged at a constant current of 0.33C to a charge cut-off voltage of 4.25 V, then charged at a constant voltage to a current of 0.05C, left standing for 5 min, and then discharged at a constant current of 0.33C to a discharge cut-off voltage of 2.5 V. An initial capacity of the battery was recorded as C₀. Then, the battery was charged at a rate of 1C₀, discharged at 1C₀, and a discharge capacity Cₙ for each cycle (n was the number of cycles, n=1 to 1000) was recorded. After 1000 cycles, a cycling capacity retention rate was calculated (that was, C₁₀₀₀/C₀×100%). A higher cycling retention rate indicates a longer service life.

**Table 1**

| No. | Oil absorption value (mL/100g) | Proportion of secondary particles (%) | D1 (µm) | Dᵥ50 (µm) | Processing performance (s) | Fast charging capacity at 25°C (min) | Cycling performance (%) |
|---|---|---|---|---|---|---|---|
| Example 1 | 62 | 65 | 5.2 | 15.1 | 90 | 10.0 | 87.5 |
| Example 2 | 54 | 68 | 6.0 | 15.3 | 81 | 9.4 | 90.1 |
| Example 3 | 48 | 69 | 6.2 | 15.5 | 72 | 9.1 | 91.1 |
| Example 4 | 44 | 67 | 6.0 | 15.3 | 63 | 8.7 | 91.7 |
| Example 5 | 40 | 65 | 5.8 | 15.0 | 57 | 8.2 | 92.3 |
| Comparativ e example 1 | 70 | 66 | 5.8 | 15.4 | 434 (Difficult to filter) | 12.3 | 75.2 |
| Comparativ e example 2 | 76 | 68 | 6.0 | 15.7 | Fail to be filtered | 14.5 | 69.1 |
| Comparativ e example 3 | 68 | 67 | 5.4 | 15.4 | 306 (Difficult to filter) | 13.0 | 72.6 |

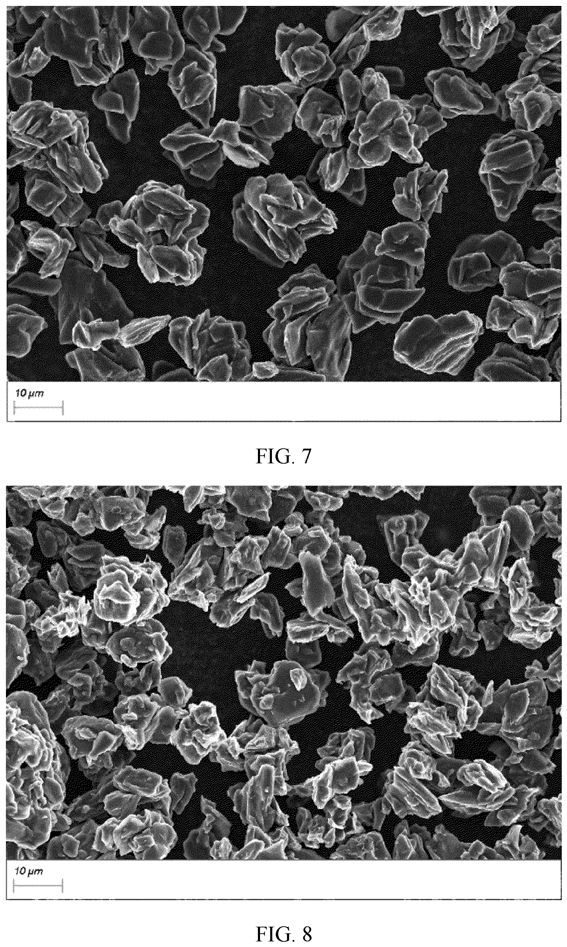

A scanning electron microscope image of the negative electrode active material in Example 1 is shown in FIG. 7. In Comparative example 1, fewer concave-convex structures are on the surface of the negative electrode active material, resulting in a smaller oil absorption value. A scanning electron microscope image of the negative electrode active material in Comparative example 1 is shown in FIG. 8. In Comparative example 1, more concave-convex structures are on the surface of the negative electrode active material, resulting in a larger oil absorption value.

The test results show that in Examples 1 to 5, the fine powder in the powder is effectively removed through the first classification treatment during the preparation of the negative electrode active material. After liquid-phase coating, the oil absorption value of the negative electrode active material is low, and the negative electrode active material has both a high proportion of secondary particles and a low oil absorption value. Thus, the rate performance and processing performance of the negative electrode active material can be significantly improved. Further, compared with solid-phase coating agents, liquid-phase coating agents have better fluidity, spread more evenly on the surface of the secondary particle, have a better coating effect, can restrain and buffer the volume expansion of graphite, and improve the cycling stability of the negative electrode active material.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A battery, comprising a positive electrode plate, a negative electrode plate, and a separator, wherein the negative electrode plate comprises a negative electrode current collector and a negative electrode active material layer located on at least one side of the negative electrode current collector; the negative electrode active material layer comprises a negative electrode active material; the negative electrode active material comprises graphite; a quantity proportion of secondary particles in the negative electrode active material is greater than or equal to 65%; an oil absorption value of the negative electrode active material is 40 mL/100g to 65 mL/100g; and a particle size by volume Dᵥ1 of the negative electrode active material is 4 µm to 8 µm.

2. The battery according to claim 1, wherein the negative electrode active material satisfies that (Dᵥ90-Dᵥ10)/Dᵥ50 is 0.8 to 1.2.

3. The battery according to claim 2, wherein a particle size by volume Dᵥ10 of the negative electrode active material is 7 µm to 11 µm, and/or a particle size by volume Dᵥ90 of the negative electrode active material is 20 µm to 30 µm, and/or a particle size by volume Dᵥ50 of the negative electrode active material is 12 µm to 18 µm.

4. The battery according to any one of claims 1 to 3, wherein a graphitization degree of the negative electrode active material is 93% to 95%.

5. The battery according to any one of claims 1 to 3, wherein a specific surface area of the negative electrode active material is 2.5 m²/g to 3.5 m²/g.

6. The battery according to any one of claims 1 to 3, wherein the negative electrode active material further comprises a carbon coating layer, the carbon coating layer is located on at least part of a surface of the secondary particle, and the secondary particle is formed by bonding at least two primary particles, using a bonding material comprising a carbon material.

7. The battery according to any one of claims 1 to 3, wherein a porosity of the negative electrode active material layer is 18% to 35%.

8. The battery according to any one of claims 1 to 3, wherein a compacted density of the negative electrode active material layer is 1.60 g/cm³ to 1.75 g/cm³.

9. A method for preparing the battery according to any one of claims 1 to 8, comprising:
mixing graphite primary particles with a binder and performing a first heat treatment to obtain pre-bonded secondary particles;
performing a second heat treatment and a first classification treatment on the pre-bonded secondary particles to obtain secondary particles, so as to obtain a negative electrode active material; and
arranging the negative electrode active material on one side of a negative electrode current collector to obtain a negative electrode plate, and assembling the negative electrode plate, a separator, and a positive electrode plate to obtain the battery.

10. The method according to claim 9, wherein the providing the graphite primary particles comprises: performing a pulverization treatment and a second classification treatment on a raw material to obtain the graphite primary particles, wherein the raw material comprises at least one of raw petroleum coke and raw needle coke; and
the providing the graphite primary particles satisfies at least one of the following conditions:
a volatile percentage in the raw material is 4% to 7%;
a true density of the raw material is 1.35 g/cm³ to 1.50 g/cm³;
a sulfur percentage in the raw material is less than or equal to 2%;
a feeding frequency for the pulverization treatment is 10 Hz to 35 Hz; and
a classification frequency for the second classification treatment is 30 Hz to 50 Hz.

11. The method according to claim 9 or 10, wherein the binder comprises at least one of asphalt and resin, and the binder satisfies at least one of the following conditions:
a coking value of the binder is 60% to 70%;
a mass ratio of the binder to the graphite primary particles is (7-10): 100; and
a particle size of the binder is 4 µm to 8 µm.

12. The method according to claim 9 or 10, wherein the first heat treatment is performed at a temperature of 600°C to 800°C, and the first heat treatment is performed for 1 h to 4 h.

13. The method according to claim 9, wherein the second heat treatment is performed at a temperature of 2800°C to 3300°C, and the second heat treatment is performed for 36 h to 72 h.

14. The method according to claim 9, wherein the first classification treatment satisfies at least one of the following conditions:
a sieve used in the first classification treatment has 300 meshes to 350 meshes;
a feeding frequency for the first classification treatment is 4 Hz to 10 Hz; and
a classification frequency for the first classification treatment is 30 Hz to 50 Hz.

15. The method according to claim 9, after obtaining the secondary particles, further comprising:
mixing the secondary particles with a liquid-phase coating agent and performing a third heat treatment to form a carbon coating layer on part of a surface of the secondary particle, wherein the liquid-phase coating agent comprises at least one of asphalt and resin with a viscosity of less than or equal to 500 mPa·s.

16. The method according to claim 15, wherein a mass ratio of the liquid-phase coating agent to the secondary particles is (2-10):100, and/or a coking value of the liquid-phase coating agent is 40% to 70%.

17. The method according to claim 15 or 16, wherein the third heat treatment is performed at 1000°C to 1200°C, and the third heat treatment is performed for 15 h to 30 h.

18. An electric apparatus, comprising the battery according to any one of claims 1 to 8, or a battery prepared using the method according to any one of claims 9 to 17.
